Europäisches Patentamt

**European Patent Office**

Office européen des brevets

(11) Numéro de publication: **0 226 534**
**A1**

(12) ## DEMANDE DE BREVET EUROPEEN

(21) Numéro de dépôt: **86810458.9**

(22) Date de dépôt: **16.10.86**

(51) Int.Cl.⁴: **F 23 C 9/08**
**F 24 H 1/44**

(30) Priorité: **21.10.85 CH 4525/85**

(43) Date de publication de la demande:
**24.06.87 Bulletin 87/26**

(84) Etats contractants désignés:
**AT BE CH DE FR GB IT LI LU NL SE**

(71) Demandeur: **BATTELLE MEMORIAL INSTITUTE**
**7 route de Drize**
**CH-1227 Carouge/Genève(CH)**

(72) Inventeur: **Noir, Dominique**
**Chemin du Jura 9**
**CH-1170 Aubonne(CH)**

(74) Mandataire: **Dousse, Blasco et al,**
**7, route de Drize**
**CH-1227 Carouge/Genève(CH)**

(54) Procédé pour alimenter un brûleur d'une chaudière en un mélange comburant.

(57) Cette chaudière comporte un brûleur (1) un premier échangeur de chaleur (4) pour refroidir les gaz de combustion à environ 200°C et un second échangeur de chaleur (5) pour refroidir ces gaz au-dessous de la température de condensation de la vapeur d'eau contenue dans ces gaz. Un conduit (6) dont l'admission est située entre les deux échangeurs (4, 5) est relié à l'admission d'un ventilateur (2) associé au brûleur, pour former un mélange avec l'air aspiré par ce ventilateur à travers un conduit (A). La température de ce mélange contenant environ 30% de gaz de combustion recirculé à environ 200°C se situe dans tous les cas au-dessus de la température de rosée du mélange pour éviter la condensation dans le ventilateur (2) et le brûleur (1).

EP 0 226 534 A1

## PROCEDE POUR ALIMENTER UN BRULEUR
## D'UNE CHAUDIERE EN UN MELANGE COMBURANT

La présente invention se rapporte à un procédé pour alimenter un brûleur de chaudière en un mélange comburant, chaudière dans la chambre de combustion de laquelle les gaz de combustion sont refroidis au-dessous de leur température de rosée.

Il existe deux moyens pour augmenter le rendement des chaudières à chambre de combustion. L'un consiste à diminuer l'excès d'air comburant de sorte que le débit massique de gaz de combustion rejeté soit plus faible. La conséquence de cette mesure se traduit par une augmentation de la température de la flamme et par conséquent par une production accrue d'oxydes d'azote. L'autre moyen, qui peut être complémentaire du premier consiste à refroidir davantage les fumées, et, dans les chaudières à gaz, à les refroidir même jusqu'au-dessous du point de rosée de la vapeur d'eau des gaz de combustion, qui se situe aux environs de 59°C aux conditions stoechiométriques pour le gaz naturel, de manière à récupérer une partie de la chaleur de condensation de cette vapeur. Une telle solution est décrite notamment dans le DE-A1-3,318,468.1. Le gaz naturel ne contenant pratiquement pas de soufre, l'acidité des condensats s'en trouve diminuée.

Toutefois, les nitrites et nitrates contenus dans les condensats en raison de la production d'oxydes d'azote abaissent le pH des condensats jusqu'à 3,5 - 4, ce qui oblige à utiliser des échangeurs de chaleur en métaux résistant à la corrosion dont le prix est relativement élevé. Etant donné que l'écart de température entre les gaz de combustion et l'eau est faible dans la zone de condensation, la surface d'échange doit être grande, ce qui augmente d'autant le prix.

On connaît déjà des chaudières dans lesquelles du gaz de combustion est prélevé à la sortie de la chambre de combustion pour être mélangé à l'air comburant fourni au brûleur par le ventilateur. Ce procédé de recirculation bien connu a pour effet de réduire la pression partielle d'oxygène du mélange. Le taux d'excès d'air peut également être réduit sans diminuer le débit massique à travers le brûleur. La pression partielle d'oxygène du mélange étant inférieure à celle de l'air, la température de la flamme est de ce fait également abaissée, réduisant ainsi la production de $NO_x$, comme ceci est expliqué notamment dans le US-A-3,880,570. Cette solution n'est malheureusement pas utilisable dans le cas des chaudières à condensation étant donné qu'en recirculant les gaz de combustion refroidis à des températures relativement basses et en les mélangeant à l'air à température ambiante, la température de ce mélange descend au-dessous du point de rosée de la vapeur d'eau de sorte que celle-ci se condenserait dans le ventilateur, dans le brûleur et dans les conduits qui distribuent ce mélange au ventilateur. C'est la raison pour laquelle on a renoncé à utiliser la recirculation dans les chaudières dans lesquelles on condense la vapeur d'eau des gaz de combustion, afin de ne pas étendre encore la zone déjà affectée par la corrosion.

Le but de la présente invention est de remédier, au moins partiellement, aux inconvénients des solutions susmentionnées.

A cet effet, cette invention a pour objet un procédé pour alimenter un brûleur de chaudière en un mélange comburant, selon la revendication 1.

L'avantage de la solution proposée réside dans le fait que l'on bénéficie de la recirculation en évitant les inconvénients d'une condensation de liquides acides dans le ventilateur. Grâce à ce procédé, l'acidité des condensats obtenus dans l'échangeur de chaleur dans lequel les fumées sont refroidies au-dessous du point de rosée de la vapeur d'eau sera plus faible, réduisant ainsi notablement les risques de corrosion. Par la même occasion on réduit considérablement la quantité d'oxydes d'azote rejetés dans l'atmosphère, dont les conséquences vis-à-vis de l'environnement sont dommageables.

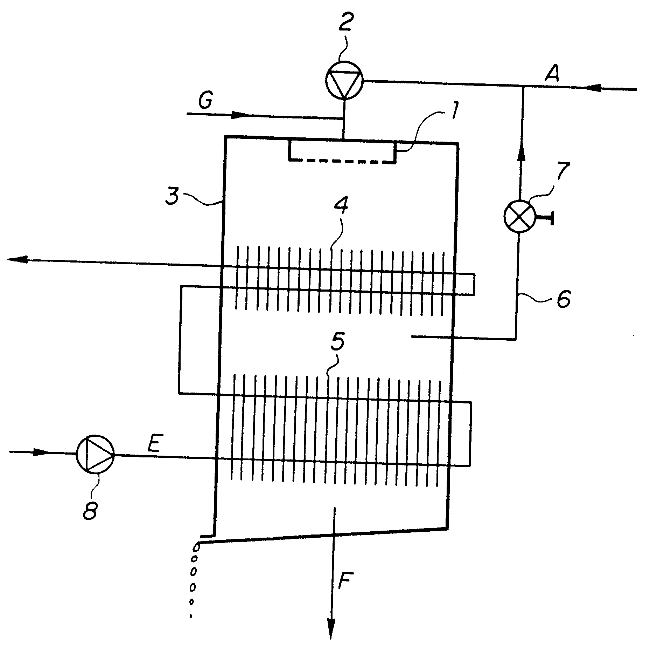

La figure unique du dessin annexé illustre, très schématiquement et à titre d'exemple, une chaudière à condensation conçue pour mettre en oeuvre le procédé objet de la présente invention.

La chaudière illustrée comporte un brûleur 1 alimenté en combustible sous forme de gaz sous pression par un conduit G et en comburant, par un conduit d'alimentation en air A relié à l'admission d'un ventilateur 2 dont la sortie communique avec le brûleur 1.

Le brûleur 1 est monté dans une chambre de combustion 3 qui renferme deux échangeurs de chaleur 4 et 5 dans lesquels circule un fluide de chauffage tel que l'eau d'une installation de chauffage central amenée par un conduit E, par un circulateur 8. La sortie de la chambre de combustion 3 est reliée à une cheminée d'évacuation (non représentée) la sortie de la fumée de cette chambre étant symbolisée par la flèche F. Un conduit 6, muni d'une valve de réglage 7, relie la zone de la chambre de combustion située entre les deux échangeurs de chaleur 4 et 5 au conduit d'alimentation en air A.

Le brûleur 1 étant disposé dans la chambre de combustion 3, tout l'air nécessaire à la combustion est fourni au brûleur par le ventilateur 2, de sorte qu'il est possible de contrôler la quantité d'air, notamment, l'excès d'air par rapport à la masse de combustible. Il s'agit d'un brûleur à prémélange total. Compte tenu de la liaison entre l'entrée du ventilateur 2 et la chambre de combustion 3 par le conduit 6 et la valve 7, il est possible de régler également la proportion de gaz de combustion recirculés et de choisir par conséquent un ventilateur dont le débit massique est supérieur au débit massique d'air nécessaire à la combustion du débit massique de gaz combustible, en fonction du taux d'excès d'air choisi.

Selon le procédé objet de l'invention et contrairement à ce qui est pratiqué dans le domaine de la recirculation externe, les gaz recirculés ne sont donc pas prélevés à la sortie de la chambre de combustion 3, mais dans une zone située entre les deux échangeurs de chaleur 4 et 5, où la température des gaz de combustion se situe entre 100° et 200°C. En mélangeant ces gaz de combustion dans la proportion définie avec de l'air comburant à température ambiante, on doit former un mélange comburant dont la pression partielle d'oxygène est inférieure à celle de l'air et dont la température est supérieure au point de rosée de la vapeur d'eau qui se situe autour de 30°C avec un taux d'excès d'air de 20% et une recirculation de 30% .

On sait que le gaz naturel ne contient pratiquement pas de soufre, de sorte que l'on évite, en condensant les fumées, la formation de sulfate, que la contribution du $CO_2$ à l'acidité des condensats est négligeable et que, dans ce cas, cette acidité est essentiellement due aux nitrites et nitrates.

Etant donné que l'on diminue la température de flamme en abaissant la pression partielle d'oxygène par la recirculation on réduit la formation de $NO_x$ et donc on abaisse l'acidité des condensats qui se forment dans le second échangeur de chaleur 5 où la fumée est refroidie jusqu'à environ 45°C, soit au-dessous du point de rosée.

Si l'on recirculait directement ces gaz de combustion refroidis à 45°C à raison de 30% du débit massique total de mélange comburant, mélangé avec de l'air à 0°C, la température résultante serait de 10°C environ, soit très inférieure au point de rosée qui se situe pour un tel mélange contenant 20% d'excès d'air et dans le cas d'un brûleur à prémélange total, à 30°C environ. En recirculant la même proportion de gaz de combustion prélevé à la sortie du premier échangeur de chaleur, la température du mélange est supérieure à celle du point de rosée de sorte que l'on évite la formation de condensats acides dans le ventilateur et le brûleur.

En général, les brûleurs compacts à gaz, à prémélange total, sont formés d'une plaque perforée en céramique ou métallique à la surface de laquelle une nappe de flammes de 1 cm de hauteur environ se forme. Etant donné que la température de cette plaque augmente lorsque la charge du brûleur diminue (300-400°C à charge nominale, 500-600°C à 30% de la charge, pour un brûleur sans recirculation) il est souvent nécessaire de prévoir un système de refroidissement qui renchérit le brûleur. La recirculation, dans ce cas, en diminuant la température de flamme, évite ainsi la surchauffe du brûleur à charge partielle et donc la nécessité d'un système de refroidissement. C'est un avantage supplémentaire de ce procédé.

Si l'on examine maintenant l'effet du procédé sur les fumées évacuées de la chambre de combustion, on mesure les concentrations suivantes après déshydratation : 9-10% $CO_2$, 3-4% $O_2$, 86-87% $N_2$, 500 ppm CO, 20 ppm $NO_x$ avec le procédé décrit contre 50 ppm $NO_x$ sans recirculation. Ceci se traduit par une acidité des condensats formés dans l'échangeur de chaleur 5 qui passe d'un pH de 3,5-4 à un pH de l'ordre de 5 dans le cas du procédé décrit.

A titre d'exemple, si la chaudière a une puissance de 20 kW, et que le gaz naturel a un pouvoir calorifique supérieur de l'ordre de 10 kWh/m$^3$, le débit de gaz sera de l'ordre de 2 m$^3$/h. Avec un taux d'excès d'air de 1,2, le débit d'air est de 20 m$^3$/h et si l'on fixe un taux de gaz de combustion recirculé de 30%, ce débit est de l'ordre de 6 m$^3$/h. Si les gaz de combustion chauds, en amont de l'échangeur de chaleur 4 ont une température d'environ 1000°C et qu'ils sont refroidis à environ 200°C, les gaz de combustion prélevés à cette température et mélangés avec de l'air extérieur dont la température inférieure se situe à - 10°C, la température du mélange se situe autour de 40°C, soit sensiblement au-dessus de la température de rosée qui est, comme on l'a vu, de l'ordre de 30°C. Ensuite, le reste des gaz de combustion est refroidi dans le second échangeur de chaleur 5 à environ 45°C, la température de retour de l'eau du circuit de chauffage étant comprise entre 25°C et 40°C.

Le rendement d'une telle chaudière vis-à-vis du pouvoir calorifique supérieur (PCS) dans lequel on tient compte de la chaleur de condensation de $H_2O$, qui n'est pas pris en considération dans le cas du pouvoir calorifique inférieur (PCI), est de l'ordre de 93% alors que vis-à-vis du PCI, qui est le plus généralement pris en compte pour le calcul du rendement des chaudières, ce rendement s'élève à 103% étant donné que

$$\frac{PCS - PCI}{PCI} \sim 11\%$$

En comparaison, ces rendements sont, dans le cas des meilleures chaudières existantes sans condensation ni recirculation, de 90% et 80% vis-à-vis du PCS respectivement du PCI.

On peut encore signaler que, étant donné l'absence de toute condensation des gaz de combustion recirculés, la concentration volumique d'eau des gaz qui traversent l'échangeur à condensation 5, reste égale à celle de l'air, de sorte que cette recirculation n'abaisse pas la température du point de rosée. De ce fait, le rendement du condenseur n'est pas diminué.

Etant donné qu'une certaine proportion d'oxygène subsiste dans les gaz de combustion recirculés, il est possible de diminuer le taux d'excès d'air alimentant le brûleur, en fonction de cette proportion d'oxygène et d'augmenter de ce fait la température de rosée.

6   0226534

R E V E N D I C A T I O N S

1. Procédé pour alimenter un brûleur de chaudière en un mélange comburant, chaudière dans la chambre de combustion de laquelle les gaz de combustion sont refroidis au-dessous de leur température de rosée, caractérisé par le fait que l'on prélève un débit massique de gaz de combustion dans la chambre de combustion de cette chaudière, dans une proportion donnée du débit massique d'air choisi en fonction du débit massique de combustible, à un endroit de ladite chambre de combustion où ces gaz ont une température telle que, en les mélangeant audit débit massique d'air, la température de ce mélange se situe au-dessus du point de rosée de la vapeur d'eau contenue dans ce mélange.

2. Procédé selon la revendication 1, selon lequel lesdits gaz de combustion sont refroidis au-dessous de ladite température de rosée en passant par un seuil de température intermédiaire, caractérisé par le fait que l'on prélève ledit débit massique de gaz de combustion audit seuil de température intermédiaire.

Office européen
des brevets

**RAPPORT DE RECHERCHE EUROPEENNE**

**0226534**
Numero de la demande

EP 86 81 0458

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| Y,D | DE-A-3 318 468 (VETTER)<br>* Résumé; figure 1 * | 1,2 | F 23 C 9/08<br>F 24 H 1/44 |
| | --- | | |
| Y,D | US-A-3 880 570 (MARSHALL)<br>* Colonne 2, lignes 21-32,37-43,57-60; figure 1 * | 1,2 | |
| | --- | | |
| A | DE-A-3 040 830 (STEINMÜLLER) | | |
| | ----- | | |

DOMAINES TECHNIQUES RECHERCHES (Int Cl 4)

F 23 C
F 24 H

Le present rapport de recherche a ete etabli pour toutes les revendications

| Lieu de la recherche | Date d achevement de la recherche | Examinateur |
|---|---|---|
| LA HAYE | 20-01-1987 | PESCHEL G. |